# EUROPÄISCHE PATENTANMELDUNG

(11) **EP 1 391 984 A2**
(43) Veröffentlichungstag der Anmeldung: **25.02.2004**
(21) Anmeldenummer: 03018099.6
(22) Anmeldetag: 08.08.2003
(51) Int. Cl.: H02P 6/08

(54) **Elektrisch kommutierbarer Motor, insbesondere als Nassläufer für Pumpen**

(30) Priorität: 21.08.2002 DE 10238226
(71) Anmelder: ROBERT BOSCH GMBH, 70442 Stuttgart (DE)
(72) Erfinder: Goesling, Bernulf, 73760 Ostfildern (DE)

(57) **Zusammenfassung**

Die Erfindung betrifft einen elektrisch kommutierbaren Motor, der durch eine besondere Ausgestaltung von Ständer, Läufer und Steuerschaltung besonders als Nassläufer ausreichenden Wirkungsgrad bei einfachem Aufbau und kleiner Baugröße keine Korrosionsprobleme aufweist.

## Beschreibung

Die Erfindung betrifft einen elektrisch kommutierbaren Motor, insbesondere als Nassläufer für Pumpen.

### Stand der Technik

Gerade beim Einsatz von elektrisch kommutierbaren Motoren für den Antrieb von Heizungspumpen ist der Nassläufer die Regel, d.h. der Läufer befindet sich im Heizungswasser. Bei Pumpen mit Permanentmagnetmotoren ist der Aufbau des Läufers kompliziert. Der Läufer ist mit Permanentmagneten bestückt, die auf dem Blechpaket des Läufers aufgeklebt sind. Die Permanentmagnete sind korrosionsanfällig und müssen vor dem Heizungswasser geschützt werden.

Es sind auch schon Kodensatormotoren und Spaltpolmotoren für die Verwendung eingesetzt worden, die wohl einen einfacheren Aufbau aufweisen, jedoch einen schlechten Wirkungsgrad besitzen.

Es ist Aufgabe der Erfindung, einen elektrisch kommutierbaren Motor der eingangs erwähnten Art zu schaffen, der ohne Verwendung von Permanentmagneten mit einfachem Aufbau des Läufers als Nassläufer eingesetzt werden kann und dabei bei kleiner Baugröße einen guten Wirkungsgrad besitzt.

### Vorteile der Erfindung

Diese Aufgabe wird nach der Erfindung durch die Auslegung mit folgenden Komponenten erreicht:
a) einem Ständer mit n Polen mit Phasen-Wicklungen, die in Sternschaltung und/oder in n-Eck-Schaltung geschaltet und/oder schaltbar sind, wobei n ≥3 ist,
b) einem Läufer, der aus einem geschichteten Blechpaket mit in axialen Nuten eingebrachten, elektrischen Leitern besteht, die an den beiden axialen Stirnseiten des Blechpaketes mit elektrisch leitenden Scheiben verbunden sind, und
c) einer Steuerschaltung, die die Phasen-Wicklungen mit konstanten und/oder modulierbaren Ansteuerimpulsen beaufschlagt, wobei die Ansteuerimpulse periodisch mit konstanter und/oder veränderbarer Frequenz sowie mit Abstand zueinander und/oder überlappend zuführbar sind, um die Drehzahl, die Drehrichtung und/oder die Antriebsleistung festzulegen.

Bevorzugt ist nach einer Ausgestaltung vorgesehen, dass die Steuerschaltung mit elektronischen Bauelementen als Schaltelemente aufgebaut ist. Der Motor ist dann mit einer Steuerschaltung aufbaubar, die als integrierte Schaltung mit einem elektronischen Bauelement ausgebildet ist.

Die Anzahl der Nuten im Blechpaket des Läufers ist größer als die Anzahl der Pole mit den Phasen-Wicklungen des Ständers. Dabei ist die Anzahl der Nuten im Blechpaket des Läufers unabhängig von der Anzahl der Pole mit den Phasen-Wicklungen. Die Nuten sind jedoch gleichmäßig über den Umfang des Blechpaketes des Läufers verteilt.

Um der Zentrifugalkraft des Läufers standzuhalten, ist nach einer Weiterbildung vorgesehen, dass die elektrischen Leiter in den Nuten des Blechpaketes des Läufers festgelegt, insbesondere radial ohne Bewegungsspiel eingebettet sind. Es bleibt zu erwähnen, dass jede Nut im Blechpaket des Läufers mindestens einen elektrischen Leiter aufnimmt.

Der Steuerschaltung kann bei der Auslegung des Motors zur Regelung der Drehzahl, der Drehrichtung und/oder der Antriebsleistung ein Regelsignal zugeführt werden, das nach bevorzugter Ausgestaltung zu pulsweitenmodulierten Ansteuerimpulsen führt.

### Zeichnung

Die Erfindung wird anhand eines in der Zeichnung dargestellten Ausführungsbeispiels näher erläutert. Es zeigen:
- Fig. 1: den prinzipiellen Aufbau des elektrisch kommutierbaren Motors mit Steuerschaltung und
- Fig. 2: in schematischer Seitenansicht den Aufbau des Läufers des Motors nach Fig. 1.

### Ausführungsbeispiel

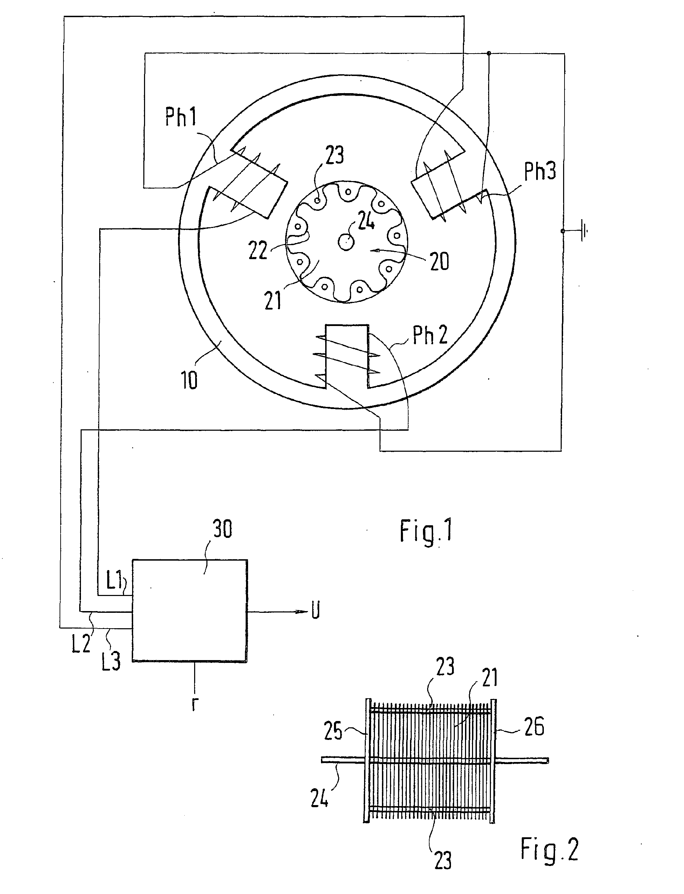

Der in Fig. 1 skizzierte elektrisch kommutierbare Motor weist drei Phasen auf. Der Ständer 10 hat im Ausführungsbeispiel drei Pole mit den zugeordneten Phasen-Wicklungen Ph1, Ph2 und Ph3. Die Pole sind um 120° zueinander versetzt und entgegen dem Uhrzeigersinn nummeriert. Die Steuerschaltung 30 mit mechanischen oder elektronischen Schaltelementen steuert über die Leitungen L1, L2 und L3 diese Phasen-Wicklungen Ph1, Ph2 und Ph3 an. Der Ständer 10 ist im Prinzip wie bei einem Permanentmagnetmotor aufgebaut und wird von einer üblichen Steuerschaltung 30 angesteuert, wobei alle im Stand der Technik üblichen Steuerverfahren anwendbar sind. So kann die Steuerschaltugn 30 die Phasen-Wicklungen Ph1, Ph2 und Ph3 periodisch mit Ansteuerimpulsen speisen, wobei die Reihenfolge die Drehrichtung des Läufers 20 bestimmt und die Frequenz der Ansteuerimpulse für die Drehzahl des Läufers 20 maßgebend ist. Dabei können die Ansteuerimpulse konstant oder modulierbar sein, sich überlappen oder beabstandet sein.

Wie der Steuereingang r an der Steuerschaltung 30 zeigt, kann diese mit einem Regelsignal angesteuert werden, um die Ansteuersignale zur Regelung der Antriebsleistung und/oder die Drehrichtung und/oder die Drehzahl zu ändern. Bevorzugt wird der Steuerzyklus eine pulsweitenmodulierte Ansteuerung enthalten, wobei sich die Pulsweite der Ansteuerimpulse ändert.

Der Läufer 20 weist, wie die Fig. 2 zeigt, ein geschichtetes Blechpaket 21 auf, das in bekannter Weise aus Einzelblechen zusammengesetzt ist, die auf einer Welle 24 angeordnet und zwischen zwei stirnseitigen, elektrisch leitenden Scheiben 25 und 26 gepackt sind. Wie der Fig. 1 zu entnehmen ist, sind über den Umfang des Blechpaketes 21 gleichmäßig verteilt Nuten 22 in axialer Richtung des Blechpaketes 21 eingebracht. In diesen Nuten 22 sind elektrische Leiter 23 angeordnet, die fest eingebettet sind, damit sie den auftretenden Zentrifugalkräften standhalten und kein radiales Bewegungsspiel zulassen. In jede Nut 22 ist mindestens ein elektrischer Leiter 23 eingebracht. Diese Leiter 23 sind an den beiden Stirnseiten des Blechpaketes 21 mit den elektrisch leitenden Scheiben verbunden. Der Aufbau des Läufers 20 ähnelt einem Läufer mit Käfigwicklung eines Asynchronmotors. Das vom Ständer erzeugte Magnetfeld führt zu induzierten Strömen in den Leitern 23, um ein Nachlaufen des Läufers 20 zum Magnetfeld zu bewirken.

Das periodische Frequenzsignal der Steuerschaltung 30 bringt die Fortschaltung des Magnetfeldes im Ständer 10 und damit auch den Nachlauf des Läufers 20.

Hall-Sensoren, wie bei einem Permanentmagnetmotor sind daher auch nicht erforderlich.

Bei diesem Aufbau des Motors tritt wohl ein Schlupf zwischen der Ansteuerfrequenz und der Läuferdrehzahl auf und auch der Modulationsgrad von etwa 30 bis 100 % reicht für eine Pumpe im Heizwasser-Kreislauf einer Heizungsanlage völlig aus.

Der neue Motor eignet sich für kleinere und mittlere Antriebsleistungen und kann auch für Gebläse und andere Verbraucher mit Vorteil eingesetzt werden.

## Patentansprüche

1. Elektrisch kommutierbarer Motor, insbesondere als Nassläufer für Pumpen, bestehend aus:
a) einem Ständer (10) mit n Polen mit Phasen-Wicklungen (Ph1, Ph2, Ph3), die in Sternschaltung und/oder in n-Eck-Schaltung geschaltet und/oder schaltbar sind, wobei n ≥ 3 ist,
b) einen Läufer (20), der aus einem geschichteten Blechpaket (21) mit in axialen Nuten (22) eingebrachten, elektrischen Leitern (23) besteht, die an den beiden axialen Stirnseiten des Blechpaketes (21) mit elektrisch leitenden Scheiben (25, 26) verbunden sind, und
c) einer Steuerschaltung (30), die die Phasen-Wicklungen (Ph1, Ph2, Ph3) mit konstanten und/oder modulierbaren Ansteuerimpulsen beaufschlagt (L1, L2, L3), wobei die Ansteuerimpulse periodisch mit konstanter und/oder veränderbarer Frequenz sowie mit Abstand zueinander und/oder überlappend zuführbar sind, um die Drehzahl, die Drehrichtung und/oder die Antriebsleistung festzulegen.

2. Motor nach Anspruch 1,
**dadurch gekennzeichnet,**
**dass** die Steuerschaltung (30) mit elektronischen Bauelementen als Schaltelemente aufgebaut ist.

3. Motor nach Anspruch 1 oder 2,
**dadurch gekennzeichnet,**
**dass** die Anzahl der Nuten (22) im Blechpaket (21) des Läufers (20) größer ist als die Anzahl (n) der Pole und Phasen-Wicklungen (Ph1, Ph2, Ph3) des Ständers (10).

4. Motor nach einem der Ansprüche 1 bis 3,
**dadurch gekennzeichnet,**
**dass** die Nuten (22) gleichmäßig über den Umfang des Blechpaketes (21) des Läufers (20) angeordnet sind.

5. Motor nach einem der Ansprüche 1 bis 4,
**dadurch gekennzeichnet,**
**dass** die elektrischen Leiter (23) in den Nuten (22) des Blechpaketes (21) des Läufers (20) festgelegt, insbesondere radial ohne Bewegungsspiel eingebettet sind.

6. Motor nach einem der Ansprüche 1 bis 5,
**dadurch gekennzeichnet,**
**dass** der Steuerschaltung (30) ein Regelsignal (r) zur Änderung der Ansteuerimpulse zuführbar ist.

7. Motor nach Anspruch 6,
**dadurch gekennzeichnet,**
**dass** bei vorgegebener und/oder veränderbarer Frequenz die Ansteuerimpulse für die Phasen-Wicklungen (Ph1, Ph2, Ph3) des Ständers (10) pulsweitenmodulierbar sind (PWM-Modulation).
